Europäisches Patentamt

European Patent Office

Office européen des brevets

(19)

(11) Veröffentlichungsnummer: **0 157 097**
**A2**

(12) # EUROPÄISCHE PATENTANMELDUNG

(21) Anmeldenummer: **85100845.8**

(22) Anmeldetag: **28.01.85**

(51) Int. Cl.⁴: **F 16 J 15/34**

(30) Priorität: **04.04.84 DE 3412594**

(43) Veröffentlichungstag der Anmeldung: **09.10.85**
**Patentblatt 85/41**

(84) Benannte Vertragsstaaten: **DE FR GB IT NL**

(71) Anmelder: **GOETZE AG,**
**Bürgermeister-Schmidt-Strasse 17,**
**D-5093 Burscheid 1 (DE)**

(72) Erfinder: **Vossieck, Paul, Dürscheid 4, D-5093 Burscheid**
**(DE)**
Erfinder: **vom Stein, Karl, Am Sportfeld 15,**
**D-5093 Burscheid (DE)**

(54) Gleitringdichtung.

(57) Bei einer Gleitringdichtung, insbesondere zur Abdichtung in Pumpen, mit einem elastischen Formteil zur Abdichtung des Gleitringes zur Welle wird der axial verschiebbare Gleitring von mindestens einer Windung der Druckfeder mit radialer Spannung umgeben, so daß der Gleitring durch das dadurch gebildete Gehäuse besonders geschützt und zentriert und die axiale Anpressung des Gleitringes gegen den Gegenring sowohl durch die umgebenden Federwindungen als auch durch eine an der freien Stirnfläche angreifende weitere Federwindung bewirkt wird. Mindestens eine weitere Federwindung liegt auf dem elastischen Formteil auf und preßt dieses zur statischen Abdichtung gegen die Welle, und das elastische Formteil bildet gegebenenfalls die Auflageflächen für die äußeren Windungen der Druckfeder auf der Welle und/oder dem äußeren Umfang des Gleitringes.

- 1 -

Gleitringdichtung.

Die Erfindung betrifft eine Gleitringdichtung gemäß Oberbegriff des Hauptpatentanspruches.

Bei beispielsweise aus der FR-PS 1.241.626 bekannten Gleitringdichtungen mit axial verschiebbarem und rotierendem Gleitring wirkt eine etwa kegelförmig gewickelte und über die Welle gezogene Druckfeder in axialer Richtung und drückt den Gleitring axial gegen den Gegenring. Die Druckfeder ist im Bereich der Windungen mit dem kleinsten Durchmesser dem Wellendurchmesser angepaßt, sie ist dort mit der Welle zur Drehmomentmitnahme reibschlüssig verbunden, und sie stützt sich axial gegen einen Wellenbund ab. Die statische Abdichtung des Gleitringes zum Druckraum übernimmt ein von einer rückseitigen Ausnehmung des Gleitringes aufgenommener und über die Welle gespannter elastischer Ring, und eine zusätzliche Deckscheibe an der freien Stirnfläche des Gleitringes bildet die Auflage der Feder zum Anpressen des Gleitringes.

Gleitringdichtungen dieser Bauarten haben sich zwar in der Praxis seit Jahren hervorragend bewährt, allerdings ist ihre Herstellung vergleichsweise aufwendig und kostspielig. So besteht die beschriebene Gleitringdichtung aus mindestens vier Bauteilen, die alle gesondert gefertigt und zu einer Baueinheit zusammengefügt werden müssen. Der vorzugsweise aus hartem und verschleißfestem Sintermaterial bestehende Gleitring kann nur relativ

- 2 -

großvolumig gesintert werden, so daß die endgültigen Konturen und Ausnehmungen aus dem harten Material und durch zusätzliche mechanische Bearbveitung herausgearbeitet werden müssen.

Bei der Ausführungsform der Gleitringdichtung der FR-PS 1.241.626 erfolgt die Übertragung des Drehmomentes von der Welle auf den Gleitring ausschließlich über die Druckfeder, indem diese einmal auf der Welle reibschlüssig aufliegt und sich am Haltebund abstützt und zum anderen mit ihrer Stirnfläche gegen die freie Stirnfläche des Gleitringes drückt. Insbesondere bei Toleranzabweichungen im Fertigmaß der Feder und beim Nachlassen der Federspannkraft nach längerer Gebrauchsdauer kann es vor allem bei extremen Belastungen der Gleitringdichtungen zur mangelhaften Drehmomentübertragung mit einem Durchrutschen der Feder zu den Ringteilen kommen, es entsteht Verschleiß an der Feder und an den Ringteilen, die gesamte Dichtung kann undicht werden und muß kostspielig ausgetauscht werden.

Der vorliegenden Erfindung liegt daher die Aufgabe zugrunde, eine Gleitringdichtung gemäß Oberbegriff des Hauptanspruches zu schaffen, welche mit einfachen Bauteilen bei gleichzeitig auch verbesserter und betriebssicherer Drehmomentübertragung einfach und kostensparend herzustellen ist.

Erfindungsgemäß wird diese Aufgabe durch eine Gleitringdichtung mit den kennzeichnenden Merkmalen des Hauptan-

- 3 -

spruches gelöst.

Und zwar wird jetzt das Drehmoment von der Feder auf den Gleitring durch die auf die freie Stirnfläche des Gleitringes axial pressende Federwindung und durch die mit der äußeren Mantelfläche des Gleitringes verbundene Federwindung übertragen, so daß durch die beiden zusammenwirkenden Maßnahmen Gleitring und Feder verdrehsicherer als bei den vorbekannten Lösungen verbunden sind. Die erfindungsgemäße Gleitringdichtung ist dadurch auch bei extremen Belastungen, insbesondere auch am elastomeren Formteil, vor Schäden und Verschleiß geschützt, sie ist betriebssicher und hat somit eine längere Lebensdauer als die bisherigen Lösungen.

Dadurch, daß mindestens eine äußere Federwindung gleichzeitig den Gleitring radial pressend umschließt, ist der Gleitring in seiner Lage stabilisiert und vor einer Desaxierung mit Verschleißerscheinungen vor allem an den Gleitflächen besonders geschützt.

Dadurch, daß das elastische Formteil von einer Federwindung auf die Welle zur statischen Abdichtung des Gleitringes gepreßt wird, entsteht eine zusätzliche verbessernde Drehmomentübertragung von der Berührungsstelle des elastischen Formteiles zum Gleitring. Gleichzeitig kann das elastische Formteil sowohl die Abdichtung zur Welle als auch die Auflagefläche der Feder an der Stirnfläche des Gleitringes bilden, so daß die bei der vorbekannten Lösung verwendete Deckscheibe als weiteres Bauteil entfällt. Die erfindungsgemäße Gleitringdichtung besteht somit nur noch aus drei Bauteilen und ist einfacher und kostengünstiger herzustellen.

Weitere verbessernde Maßnahmen der erfindungsgemäßen Gleitringdichtungen ergeben sich aus den Unteransprüchen. Und zwar wird die radiale Anpressung der Federwindungen auf die Welle und/oder die Umfangsfläche durch die vom elastischen Formteil in diesem Bereich gebildeten Auflagen verbessert, und zwar auch bei größeren Abweichungen der Windungsdurchmesser vom Wellen- beziehungsweise Gleitringdurchmesser. Die optimale Drehmomentübernahme wird gewährleistet, und die Feder kann einfacher mit größeren Toleranzen hergestellt werden. Die den Gleitring umhüllenden, auf Block gewickelten Federwindungen bilden zugleich eine Schutzhülle des Gleitringes.

Im Sinne der Erfindung hat es sich in normalen Anwendungsfällen als sinnvoll erwiesen, wenn das elastomere Formteil nach dem Einbau nicht auf der Welle dichtend aufliegt. Das Balgenteil des elastomeren Formteiles ist dann aber so konstruiert, daß der Dichtbalgen durch den Außendruck, vor allem bei extremen Belastungen, auf die Welle gepreßt wird, dort abdichtend wirkt und durch die Abstützung vor Zerstörungen geschützt wird. Eine Abstützscheibe aus bevorzugt Metall oder verformungssteifem Kunststoff kann gegebenenfalls das Einpressen des elastomeren Balgens in den Spalt zwischen Welle und Gleitring verhindern.

- 5 -

Die Erfindung wird anhand der in den Abbildungen beschriebenen Gleitringdichtungen näher erläutert, und zwar zeigt:

Figur 1 eine erfindungsgemäße Gleitringdichtung im Axialschnitt

Figur 2 eine weitere erfindungsgemäße Gleitringdichtung im Axialschnitt.

Figur 3 eine weitere erfindungsgemäße Gleitringdichtung im Axialschnitt.

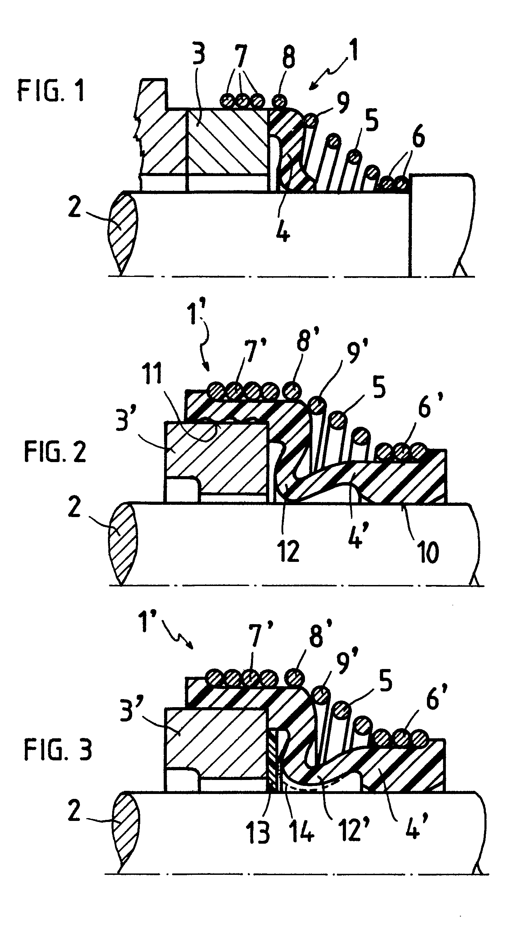

In der Abbildung 1 ist 1 eine auf eine Welle 2 montierte Gleitringdichtung mit einem Gleitring 3, einem elastischen Formteil 4 und der Druckfeder 5. Die Feder 5 ist mit den beiden Federwindungen 6 reibschlüssig mit der Welle 2 verbunden. Die Federwindungen 7 sind reibschlüssig mit dem Außenumfang des Gleitringes 3 verbunden und bilden so ein schützendes Gehäuse des Gleitringes 3. Die Federwindung 8 preßt das elastomere Formteil 4 radial auf die Welle 2, und die Federwindung 9 preßt axial den Gleitring 3 gegen den Gegenring. Bei dieser einfachen Gestaltung der Gleitringdichtung 1 ist der Gleitring 3 ein relativ einfach herzustellender Rechteckring.

Bei der Gleitringdichtung der Figur 2 bildet das elastische Formteil 4' zusätzlich die Auflagenflächen 10,11 der äußeren Federwindungen 6',7' für deren Verbindung mit der Welle 2 und dem Gleitring 3'; außer dem mit der Federwindung 8' radial auf die Welle 2 zur statischen Abdichtung gepreßten Balgen 12 und der Auflagefläche der Federwin-

- 6 -

dung 9' zum axialen Anpressen.

In der Figur 3 ist der Dichtbalgen 12' so konstruiert, daß er nach dem Einbau die Welle 2 nicht berührt und erst im Betrieb durch den von außen wirkenden Druck abdichtend auf die Welle 2 gepreßt wird (vgl. gestrichelte Linie 14). Die zwischen dem Gleitring 3' und der Welle 2 angeordnete Abstützscheibe 13 verhindert das Einpressen des Dichtbalgens 12' in den Spalt zwischen Gleitring 3 und Welle 2.

0157097

- 1 -

Patentansprüche:

1. Gleitringdichtung, insbesondere zur Abdichtung in Pumpen mit einem verschiebbaren Gleitring, einem die statische Abdichtung des Gleitringes zur Welle bewirkenden elastischen Formteil und einer die Welle konzentrisch umschließenden Druckfeder zur axialen Anpressung des Gleitringes an den Gegenring, während die Druckfeder mit mindestens einer ihrer Windungen am dem Gleitring abgewandten Ende reibschlüssig mit der Welle verbunden ist, dadurch gekennzeichnet, daß ein axiales Ende der Druckfeder (5) mit mindestens einer Windung (7) den Gleitring (3) mit radialer Spannung umschließt, daß die Druckfeder (5) mit mindestens einer Federwindung (9) auf die freie Stirnfläche des Gleitringes (3) über das elastische Formteil (4) axial preßt, und daß die Druckfeder (5) mit mindestens einer weiteren Windung (8) im Bereich der statischen Abdichtung des Gleitringes (3) zur Welle (2) am äußeren Umfang auf dem elastischen Formteil (4) aufliegt und dieses radial gegen die Welle (2) preßt.

2. Gleitringdichtung nach Anspruch 1, dadurch gekennzeichnet, daß das elastische Formteil (4) an einem oder beiden axialen Enden auf der Welle (2) und/oder der äußeren Umfangsfläche des Gleitringes (3) aufliegt und Auflageflächen (10,11) für die äußeren Windungen (6,7) der Feder zu deren radialer Anpres-

0157097

- 2 -

sung auf den Gleitring (3) und/oder die Welle (2) bildet.

3. Gleitringdichtung nach mindestens einem der Ansprüche 1 und 2, dadurch gekennzeichnet, daß die Feder (5) an ihrem dem Gleitring (3) zugewandten Ende mit mindestens zwei auf Block gewickelten Federwindungen (7') den Gleitring umgibt, so daß diese Windungen (7') ein stabiles Gehäuse des Gleitringes (3) bilden.

4. Gleitringdichtung nach mindestens einem der Ansprüche 1 bis 3, dadurch gekennzeichnet, daß der Dichtbalgen (12') des elastomeren Formteiles (4) nach dem Einbau mit Abstand zur Welle angeordnet ist, so daß dieser erst durch den Außendruck im Betrieb abdichtend auf die Welle (2) aufgepreßt wird.

5. Gleitringdichtung nach Anspruch 4, dadurch gekennzeichnet, daß zwischen Gleitring (3) und dem Dichtbalgen (2') des elastomeren Formteiles (4) eine Abstützscheibe (13) aus verformungssteifem Material angeordnet ist.

FIG. 1

FIG. 2

FIG. 3

1/1

0157097